# EUROPEAN PATENT APPLICATION

(11) **EP 4 411 491 A1**
(43) Date of publication of application: **07.08.2024**
(21) Application number: 22875397.6
(22) Date of filing: 18.03.2022
(51) Int. Cl.: G05B 13/02

(54) **CONTROL DEVICE, CONTROL SYSTEM, AND CONTROL METHOD**

(30) Priority: 28.09.2021 JP 2021157673
(71) Applicant: OMRON Corporation, Kyoto 600-8530 (JP)
(72) Inventor: FUJII, Takashi, Kyoto-shi, Kyoto 600-8530 (JP)
(74) Representative: Mewburn Ellis LLP
(86) International application number: PCT/JP2022/012679
(87) International publication number: WO 2023/053514

(57) **Abstract**

An object of the present disclosure is to improve the accuracy of a feedforward control on a control object. A feedback operation amount (rb) for the control object (200) is determined by a feedback control unit (110) based on an error (eq) between a target value (qr) and a control amount (q). A feedforward compensation unit (120) predicts a feedforward compensation value (rf) of the feedback operation amount (rb) from a disturbance (d) using a prediction model (Mp). A learning unit (130) performs machine learning on the prediction model (Mp) using supervised data (Ds). The learning unit (130) adds, to the supervised data (Ds), a combination which includes the disturbance (d) and the operation amount (r) when the absolute value of the error (eq) is smaller than a reference value (α).

## Description

### TECHNICAL FIELD

The present disclosure relates to a control device, a control system, and a control method for performing a feedforward control on a control object.

### BACKGROUND ART

Conventionally, there has been known a control device that performs a feedforward control on a control object. For example, Japanese Patent Laying-Open No. 10-222207 (PTL 1) discloses a feedforward control device that uses a feedforward signal generator to perform control on a predetermined process subjected to a disturbance. The feedforward control device includes a parameter learning unit that learns, from the parameters calculated by the feedforward signal generator, parameters necessary for performing arithmetic computations in the feedforward signal generator. According to the feedforward control device, since the parameter learning unit dynamically learns the parameters for the feedforward signal generator, it is possible to achieve stable control performance even when the disturbance varies and maintain highly accurate control performance even when the characteristics of the process change over time.

### CITATION LIST

### PATENT LITERATURE

PTL 1: Japanese Patent Laying-Open No. 10-222207

### SUMMARY OF INVENTION

### TECHNICAL PROBLEM

The configuration of a feedforward compensator included in the feedforward signal generator disclosed in PTL 1 is predefined. In general, the configuration for calculating a feedforward compensation value for a feedback control, such as a feedforward compensator, is designed as an inverse model (inverse system) of a control process. Since designing an inverse model of a control process requires analyzing the control process, it is difficult to update the configuration of the inverse model in a short time in response to the fluctuations of a disturbance and changes in the characteristics of the control process. Therefore, it would be difficult for the feedforward control device disclosed in PTL 1 to suppress the influence of the disturbance on the control object depending on the degree of fluctuations of the disturbance or the degree of changes in the characteristics of the control process.

The present disclosure has been made to solve the aforementioned problems, and an object thereof is to improve the accuracy of a feedforward control on a control obj ect.

### SOLUTION TO PROBLEM

A control device according to an aspect of the present disclosure determines a feedforward compensation value of a feedback operation amount for a control object subjected to a disturbance so as to approximate a control amount of the control object to a target value. The feedback operation amount is determined by a feedback control unit based on an error between the target value and the control amount. The sum of the feedback operation amount and the feedforward compensation value is output to the control object as an operation amount. The control device includes a feedforward compensation unit and a learning unit. The feedforward compensation unit determines the feedforward compensation value from the disturbance using a prediction model. The learning unit performs machine learning on the prediction model using supervised data. The learning unit obtains at least one first combination which includes the target value, the operation amount corresponding to the target value, the disturbance, and the control amount corresponding to both the disturbance and the operation amount. The learning unit adds, to the supervised data, at least one second combination which is a part of the at least one first combination and includes the disturbance and the operation amount when the absolute value of the error is smaller than a first reference value.

According to this disclosure, since the supervised data is selected from the results of the feedforward control, the prediction model can be adapted in real time to the disturbance and the characteristics of the control object in parallel with the feedforward control. As a result, it is possible to improve the accuracy of the feedforward control on the control object.

In the above disclosure, the learning unit may calculate an average value of the operation amount when the absolute value of the disturbance is smaller than the second reference value in the supervised data. The learning unit may approximate a relationship represented by the prediction model between the disturbance and the feedforward compensation value which is a difference between the operation amount and the average value as a function which uses the feedforward compensation value as an objective variable and uses the disturbance as an explanatory variable. The learning unit may finish the machine learning when a ratio of the number of fourth combinations to the number of third combinations is greater than a third reference value, the third combinations being a part of the at least one first combination and in the third combinations the absolute value of the disturbance being greater than the second reference value, the fourth combinations being a part of the at least one second combination and in the fourth combinations the absolute value of the disturbance being greater than the second reference value.

According to this disclosure, since the machine learning is maintained until the accuracy of the prediction model is sufficiently high, it is possible to sufficiently improve the accuracy of the feedforward control on the control object.

In the above disclosure, the learning unit may calculate an average value of the operation amount when the absolute value of the disturbance is smaller than a second reference value in the supervised data. The learning unit may approximate a relationship represented by the prediction model between the disturbance and the operation amount as a function which uses the operation amount as an objective variable and uses the disturbance as an explanatory variable. The learning unit may finish the machine learning when a ratio of the number of fourth combinations to the number of third combinations is greater than the third reference value, the third combinations being a part of the at least one first combination and in the third combinations the absolute value of the disturbance being greater than the second reference value, the fourth combinations being a part of the at least one second combination and in the fourth combinations the absolute value of the disturbance being greater than the second reference value. The feedforward compensation unit may determines a value obtained by subtracting the average value from the operation amount predicted from the disturbance by the prediction model as the feedforward compensation value.

According to this disclosure, since the machine learning is maintained until the accuracy of the prediction model is sufficiently high, it is possible to sufficiently improve the accuracy of the feedforward control on the control object.

In the above disclosure, the learning unit may restart the machine learning when the machine learning is finished and when the ratio is smaller than the third reference value.

According to this disclosure, since the prediction model is re-adapted to the characteristics of the control object in accordance with changes in the characteristics of the control object, it is possible to suppress a decrease in the accuracy of the feedforward control due to the changes in the characteristics of the control object.

A control system according to another aspect of the present disclosure outputs the sum of a feedback operation amount for a control object subjected to a disturbance and a feedforward compensation value to the control object as an operation amount so as to approximate a control amount of the control object to a target value. The control system includes a feedback control device, a feedforward compensation device, and a learning device. The feedback control device determines the feedback operation amount based on an error between the target value and the control amount. The feedforward compensation device determines the feedforward compensation value from the disturbance using a prediction model. The learning device performs machine learning on the prediction model using supervised data. The learning device obtains at least one first combination which includes the target value, the operation amount corresponding to the target value, the disturbance, and the control amount corresponding to both the disturbance and the operation amount. The learning device adds, to the supervised data, at least one second combination which is a part of the at least one first combination and includes the disturbance and the operation amount when the absolute value of the error is smaller than a first reference value.

According to this disclosure, since the supervised data is selected from the results of the feedforward control, the prediction model can be adapted in real time to the disturbance and the characteristics of the control object in parallel with the feedforward control. As a result, it is possible to improve the accuracy of the feedforward control on the control object.

A control method according to another aspect of the present disclosure determines a feedforward compensation value of a feedback operation amount for a control object subjected to a disturbance so as to approximate a control amount of the control object to a target value. The feedback operation amount is determined by a feedback control unit based on an error between the target value and the control amount. The sum of the feedback operation amount and the feedforward compensation value is output to the control object as an operation amount. The control method includes a step of determining the feedforward compensation value from the disturbance using a prediction model, and a step of performing machine learning on the prediction model using supervised data. The step of performing the machine learning includes a step of obtaining at least one first combination which includes the target value, the operation amount corresponding to the target value, the disturbance, and the control amount corresponding to both the disturbance and the operation amount; and a step of adding, to the supervised data, at least one second combination which is a part of the at least one first combination and includes the disturbance and the operation amount when the absolute value of the error is smaller than a first reference value.

According to this disclosure, since the supervised data is selected from the results of the feedforward control, the prediction model can be adapted in real time to the disturbance and the characteristics of the control object in parallel with the feedforward control. As a result, it is possible to improve the accuracy of the feedforward control on the control object.

### ADVANTAGEOUS EFFECTS OF INVENTION

According to the control device, the feedforward compensation device, the control system, and the control method of the present disclosure, it is possible to improve the accuracy of a feedforward control on a control object.

### BRIEF DESCRIPTION OF DRAWINGS

Fig. 1 is a block diagram illustrating a functional configuration of a control device according to a first embodiment;
Fig. 2 is a distribution diagram of a disturbance and an operation amount;
Fig. 3 is a diagram illustrating a relationship between an operation amount of Fig. 2 and an objective variable of a prediction model;
Fig. 4 is a diagram illustrating a relationship represented by a learned prediction model between an objective variable and an explanatory variable;
Fig. 5 is a Venn's diagram illustrating an inclusion relationship of four combinations;
Fig. 6 is a chart between a time and each of a control amount, an operation amount and a disturbance before the prediction model is learned;
Fig. 7 is a chart between a time and each of the control amount, the operation amount and the disturbance after the prediction model Mp is learned;
Fig. 8 is a flowchart illustrating a process performed by each of a feedback control system, a feedforward control system and a learning unit 130 of Fig. 1;
Fig. 9 is a flowchart illustrating a specific procedure of a machine learning process of Fig. 8;
Fig. 10 is a flowchart illustrating an additional learning process performed by a learning unit illustrated in Fig. 2;
Fig. 11 is a block diagram illustrating a functional configuration of a control device according to a first modification of the first embodiment;
Fig. 12 is a flowchart illustrating another specific procedure of the machine learning process of Fig. 2;
Fig. 13 is a block diagram illustrating a functional configuration of a control system according to a second embodiment;
Fig. 14 is a schematic diagram illustrating an example network configuration of a control system according to a third embodiment; and
Fig. 15 is a block diagram illustrating an example hardware configuration of a control device of Fig. 14.

### DESCRIPTION OF EMBODIMENTS

Hereinafter, embodiments of the present disclosure will be described in detail with reference to the accompanying drawings. In the drawings, the same or corresponding components are denoted by the same reference numerals, and the description thereof will not be repeated in general.

### [First Embodiment]

### <Application Example>

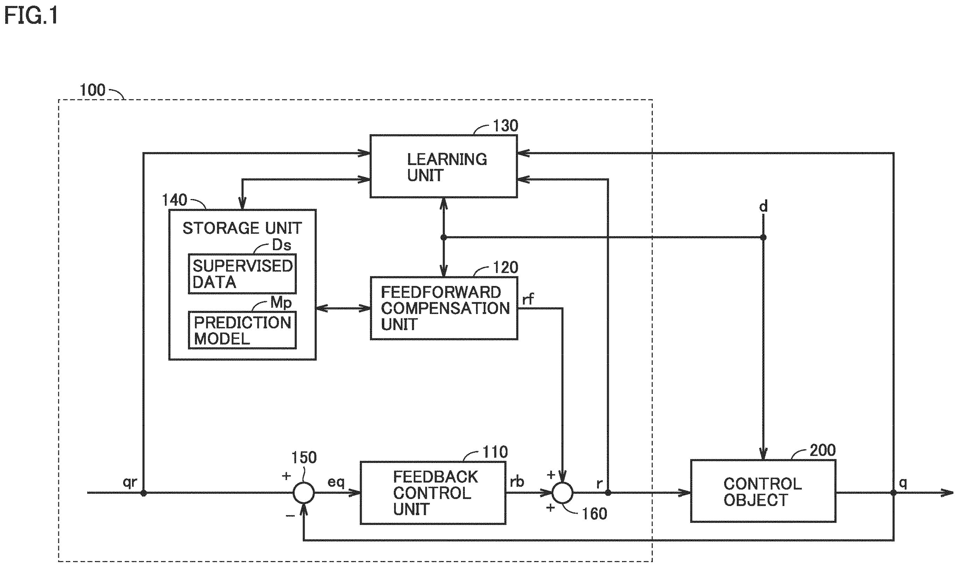

Fig. 1 is a block diagram illustrating a functional configuration of a control device 100 according to a first embodiment. As illustrated in Fig. 1, the control device 100 includes a feedback control unit 110, a feedforward compensation unit 120, a learning unit 130, a storage unit 140, a subtracter 150, and an adder 160.

The control device 100 outputs the sum of a feedback operation amount rb for a control object 200 and a feedforward compensation value rf to the control object 200 as an operation amount r so as to approximate a control amount q, which is the output value of the control object 200 subjected to a disturbance d, to a target value qr. The storage unit 140 stores a prediction model Mp and supervised data Ds. The control device 100 and the control object 200 may be connected to each other via a network (e.g., the Internet or a cloud system) and may be disposed remotely from each other. As an example of a machine learning algorithm for constructing the prediction model Mp, a deep binary tree or a support vector machine may be given.

Hereinafter, the configuration that includes the feedback control unit 110 and the subtracter 150 is also referred to as a feedback control system, and the configuration that includes the feedforward compensation unit 120 and the adder 160 is also referred to as a feedforward control system. The disturbance d refers to an amount that disturbs the state of a control system that includes the control device 100 and the control object 200. The disturbance d includes, for example, an amount of light, a voltage, a current, and a temperature that are accidentally or suddenly input to the control object.

The subtracter 150 outputs an error eq (= qr-q) between the target value qr and the control amount q to the feedback control unit 110. The feedback control unit 110 determines the feedback operation amount rb based on the error eq and outputs the same to the adder 160. The feedforward compensation unit 120 predicts the feedforward compensation value rf from the disturbance d using the prediction model Mp and outputs the predicted feedforward compensation value rf to the adder 160. The adder 160 outputs the sum of the feedback operation amount rb and the feedforward compensation value rf to the control object 200 and the learning unit 130 as the operation amount r.

The adder 160 outputs the sum of the feedback operation amount rb and the feedforward compensation value rf to the control object 200 and the learning unit 130 as the operation amount r.

The learning unit 130 performs machine learning on the prediction model Mp using the supervised data Ds. The learning unit 130 obtains at least one combination Cm1 (first combination) which includes the target value qr, the operation amount r corresponding to the target value qr, the disturbance d, and the control amount q corresponding to both the disturbance d and the operation amount r. The learning unit 130 adds, to the supervised data Ds, at least one combination Cm2 (second combination) which is a part of the at least one combination Cm1 and includes the disturbance d and the operation amount r when the absolute value of the error eq is smaller than a reference value α (first reference value) (i.e., when a high-precision control is performed on the control object 200). The reference value α may be appropriately determined based on, for example, actual experiments, simulations, standard values of products, or management values of a manufacturing step.

The learning unit 130 calculates an average value rb0 of the operation amount r when the absolute value of the disturbance d is smaller than a reference value β (second reference value) in the supervised data Ds (i.e., when the control system is in a steady state). The reference value β may be appropriately determined, for example, based on actual experiments, simulations, standard values of products, or management values of a manufacturing step. The learning unit 130 approximates the relationship between the disturbance d and the feedforward compensation value rf which is a difference (= r-rb0) between the operation amount r and the average value rb0 as a function (regression curve) which uses the feedforward compensation value rf as an objective variable and uses the disturbance d as an explanatory variable. The prediction model Mp includes the function. When a ratio Cr of the number of combinations Cm4 (fourth combination) which are a part of the at least one combination Cm2 and in which the absolute value of the disturbance d is greater than the reference value β to the number of combinations Cm3 (third combination) which are a part of the at least one combination Cm1 and in which the absolute value of the disturbance d is greater than the reference value β is greater than a reference value δ (third reference value), the learning unit 130 finishes the machine learning on the prediction model Mp.

After the machine learning (first learning or additional learning) on the prediction model Mp is finished but the ratio Cr is equal to or smaller than the reference value δ, the learning unit 130 determines that the characteristics of the control object 200 have changed, and restarts the machine learning (additional learning) on the prediction model Mp. The reference value δ may be appropriately determined based on, for example, actual experiments, simulations, standard values of products, or management values of a manufacturing step. The characteristics of the control object 200 include, for example, a correspondence relationship between the disturbance d, the operation amount r, and the control amount q.

According to the control device 100, since the supervised data Ds is selected from the results of the feedforward control, the prediction model Mp can be adapted in real time to the disturbance d and the characteristics of the control object 200 in parallel with the feedforward control. As a result, it is possible to improve the accuracy of feedforward control on the control object 200. Further, since the machine learning is maintained until the accuracy of the prediction model Mp becomes sufficiently high, it is possible to sufficiently improve the accuracy of feedforward control on the control object 200. Furthermore, since the prediction model Mp is readapted to the characteristics in accordance with changes in the characteristics of the control object 200, it is possible to suppress a decrease in the accuracy of the feedforward control due to changes in the characteristics of the control object 200.

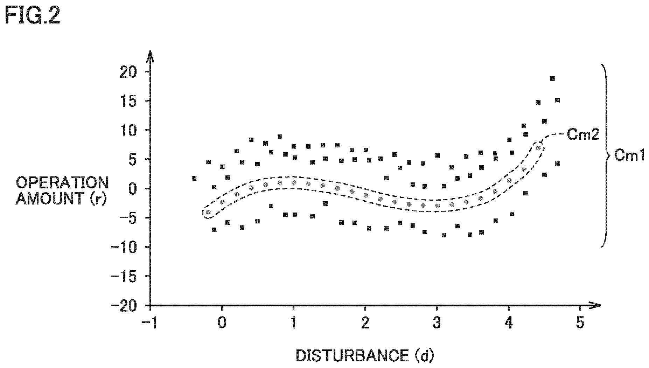

Fig. 2 is a distribution diagram of a disturbance d and an operation amount r. In Fig. 2, a square dot represents a combination Cm1 when the absolute value of the error eq is equal to or greater than the reference value α among the plurality of combinations Cm1, and a round dot represents a combination Cm2 when the absolute value of the error eq is smaller than the reference value α. The learning unit 130 adds a plurality of combinations Cm2 represented by the round dots to the supervised data Ds.

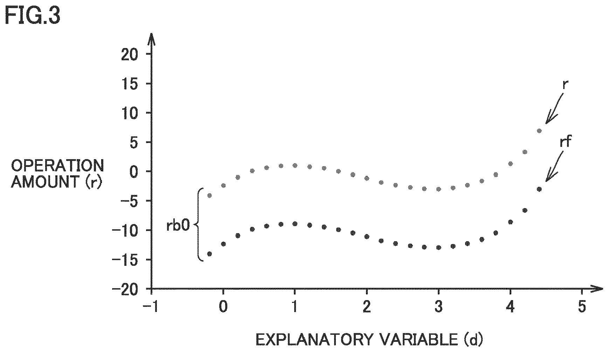

Fig. 3 is a diagram illustrating the relationship between the operation amount r of Fig. 2 and the objective variable rf of the prediction model Mp. As illustrated in Fig. 3, the data obtained by subtracting the average value rb0 from the operation amount r of each of the plurality of combinations Cm2 corresponds to the objective variable rf.

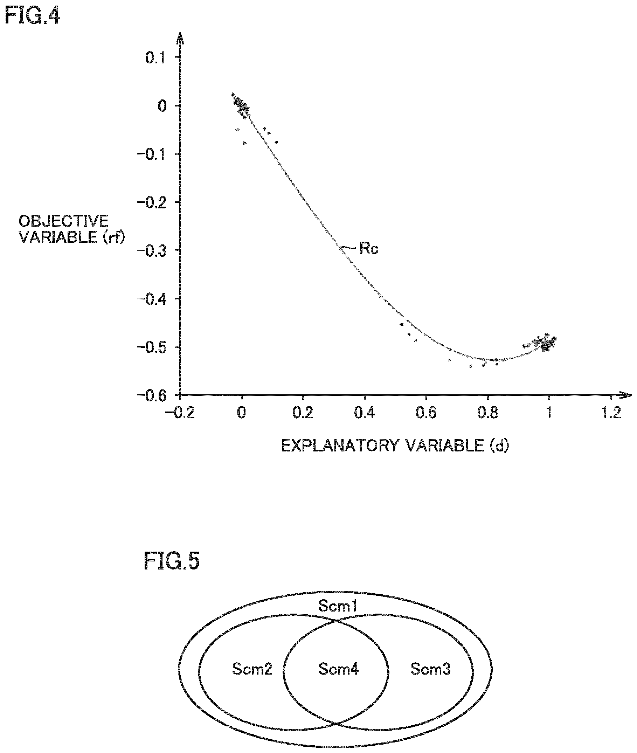

Fig. 4 is a diagram illustrating the relationship represented by the learned prediction model Mp between the objective variable rf and the explanatory variable d. This relationship is approximated by the learning unit 130 as a regression curve Rc. As illustrated in Fig. 4, the prediction model Mp, when subjected to the disturbance d, outputs the objective variable rf corresponding to the disturbance d in the regression curve Rc.

Fig. 5 is a Venn's diagram illustrating the inclusion relationship of four data sets Scm1, Scm2, Scm3 and Scm4 including four combinations Cm1 to Cm4, respectively. The data set Semi is a data set that includes all the combinations Cm1 including the target value qr, the operation amount r, the disturbance d, and the control amount q. The data set Scm2 is a data set that is a part of the data set Semi and includes all the combinations Cm2 including the disturbance d and the operation amount r when the absolute value of the error eq is smaller than the reference value α. The data set Scm3 is a data set that is a part of the data set Scm1 and includes all the combinations Cm3 when the absolute value of the disturbance d is greater than the reference value β. The data set Scm4 is a data set that is a part of the data set Scm2 and includes all the combinations Cm4 in which the absolute value of the disturbance d is greater than the reference value β. As illustrated in Fig. 5, the data set Scm1 includes the data sets Scm2 and Scm3. The data set Scm4 is a common part (product set) of the data sets Scm2 and Scm3. The average value rb0 is an average value of the data set Scm2 from which the data set Scm4 is excluded.

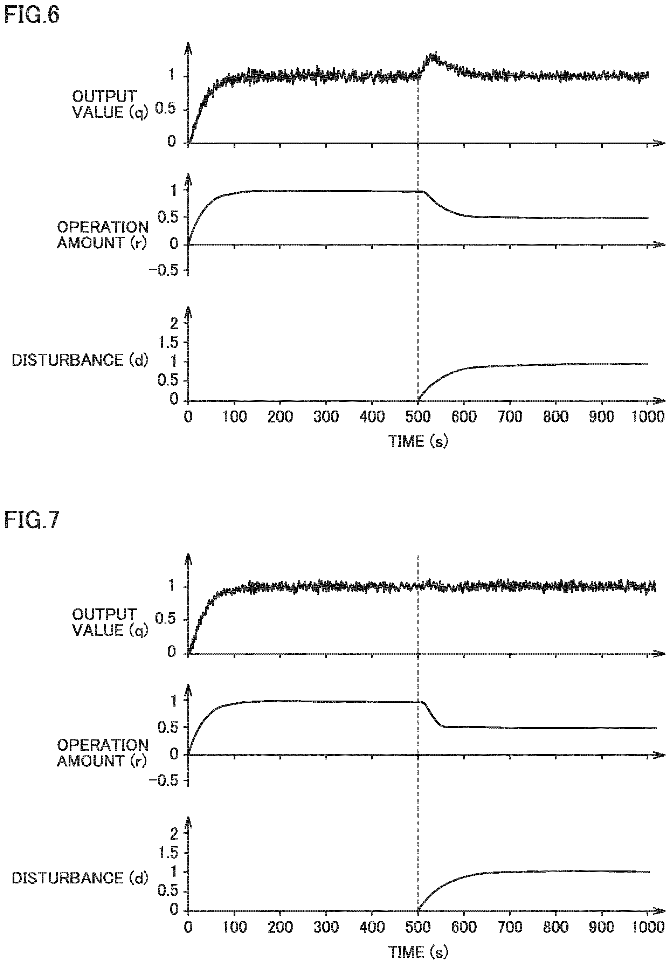

Fig. 6 is a chart between a time and each of the control amount q, the operation amount r, and the disturbance d when the prediction model Mp is not learned. As illustrated in Fig. 6, at the time of 500 seconds, the disturbance d is inputted as a step response of a first-order delay system. In response to the disturbance d, a pulse noise is superimposed on the control amount q at a time interval of 500 seconds to 600 seconds.

Fig. 7 is a chart between a time and each of the control amount q, the operation amount r, and the disturbance d after the prediction model Mp is learned. Similar to Fig. 6, in Fig. 7, at the time of 500 seconds, the disturbance d is inputted as a step response of the first-order delay system. However, contrary to that illustrated in Fig. 6, no pulse noise is superimposed on the control amount q. In Fig. 7, the feedback operation amount rb is corrected by the feedforward compensation value rf predicted by the learned prediction model Mp, whereby the accuracy of the control on the control object 200 is maintained.

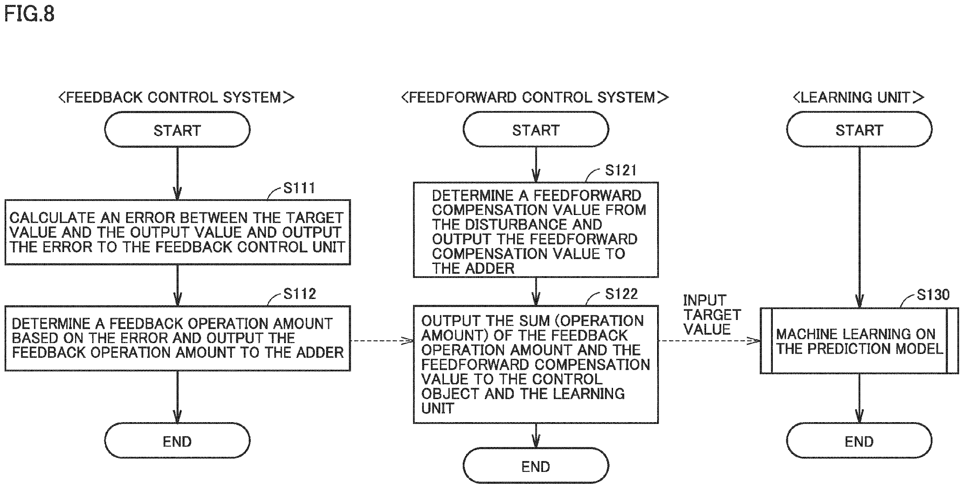

Fig. 8 is a flowchart illustrating a process performed by each of the feedback control system, the feedforward control system, and the learning unit 130 of Fig. 1. A routine corresponding to each flowchart of the feedback control system and the feedforward control system is executed, for example, every sampling time. The routine corresponding to the flowchart of the learning unit 130 is executed, for example, in response to the first execution of the routine corresponding to each flowchart of the feedforward control system. Hereinafter, the step is simply referred to as S.

As illustrated in Fig. 8, in S111, the subtracter 150 calculates an error eq between the target value qr and the control amount q, and outputs the error eq to the feedback control unit 110. In S112, the feedback control unit 110 determines a feedback operation amount rb based on the error eq, outputs the feedback operation amount rb to the adder 160, and ends the procedure.

In step S121, the feedforward compensation unit 120 determines a feedforward compensation value rf from the disturbance d, and outputs the feedforward compensation value rf to the adder 160. In S122, the adder 160 outputs the sum of the feedback operation amount rb and the feedforward compensation value rf to the control object 200 and the learning unit 130 as the operation amount r, and ends the procedure.

In S130, the learning unit 130 performs machine learning on the prediction model Mp using the supervised data Ds, and ends the procedure.

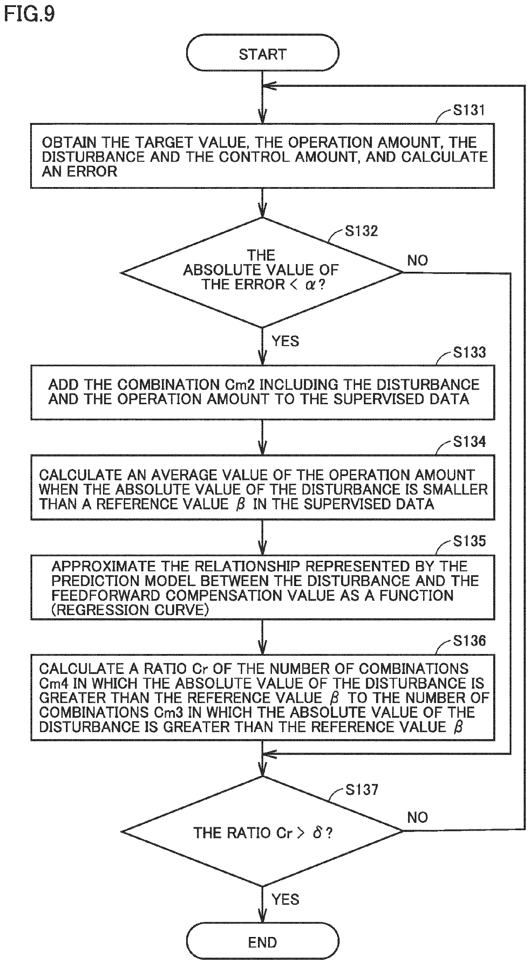

Fig. 9 is a flowchart illustrating a specific procedure of the machine learning process S130 of Fig. 8. In S131, the learning unit 130 obtains the target value qr, the operation amount r, the disturbance d, and the control amount q, calculates an error eq, and advances the procedure to S132. In step S132, the learning unit 130 determines whether or not the absolute value of the error eq is smaller than the reference value α. If the absolute value of the error eq is equal to or greater than the reference value α (NO in S132), the learning unit 130 advances the procedure to S137. If the absolute value of the error eq is smaller than the reference value α (YES in S132), the learning unit 130 adds the combination Cm2 that includes the disturbance d and the operation amount r to the supervised data Ds in S133, and advances the procedure to S134. In S134, the learning unit 130 calculates an average value rb0 of the operation amount r when the absolute value of the disturbance d is smaller than the reference value β in the supervised data Ds, and advances the procedure to S135. In step S135, the learning unit 130 approximates the relationship represented by the prediction model Mp between the disturbance d and the feedforward compensation value rf which is a difference between the operation amount r and the average value rb0 as a function (regression curve) which uses the feedforward compensation value rf as an objective variable and uses the disturbance d as an explanatory variable, and advances the procedure to step S136. In step S136, the learning unit 130 calculates a ratio Cr (= M2/M1) of the number M2 of combinations Cm4 which are a part of the at least one combination Cm2 and in which the absolute value of the disturbance d is greater than the reference value β to the number M1 of combinations Cm3 which are a part of the at least one combination Cm1 and in which the absolute value of the disturbance d is greater than the reference value β, and advances the procedure to step S137. In step S137, the learning unit 130 determines whether or not the ratio Cr is greater than a reference value δ. If the ratio Cr is equal to or smaller than the reference value δ (NO in S137), the learning unit 130 determines that the accuracy of the feedforward control on the control object 200 is insufficient, and returns the procedure to S131. If the ratio Cr is greater than the reference value δ(YES in S137), the learning unit 130 determines that the accuracy of the feedforward control on the control object 200 is sufficiently high, and ends the machine learning.

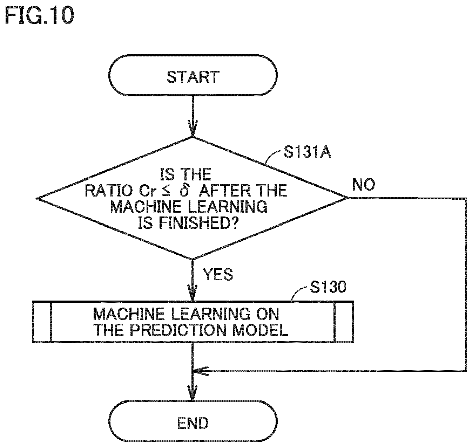

Fig. 10 is a flowchart illustrating an additional learning process performed by the learning unit 130 of Fig. 2. The procedure illustrated in Fig. 10 is executed, for example, every sampling time after the first machine learning is started. In step S13 1A, the learning unit 130 determines whether or not the machine learning is finished and the ratio Cr is equal to or smaller than the reference value δ. If the machine learning is not finished or if the ratio Cr is greater than the reference value δ (NO in S131A), the learning unit 130 determines that the characteristics of the control object 200 are not changed and the learned prediction model Mp is suitable for the control object 200, and ends the procedure. If the machine learning is finished and the ratio Cr is less than or equal to the reference value δ(YES in S131A), the learning unit 130 determines that the characteristics of the control object 200 have changed after the previous machine learning is finished, and restarts the machine learning on the prediction model Mp in S130 similar to Fig. 8 so as to readapt the prediction model Mp to the characteristics of the control object 200. According to the control device 100, since an additional learning is performed for the prediction model Mp in accordance with changes in the characteristics of the control object 200, it is possible to suppress a decrease in accuracy of feedforward control due to changes in the characteristics of the control object 200.

### [First Modification of First Embodiment]

In the first embodiment, the description has been carried out on a configuration that includes both the feedback control system and the feedforward control system. In a first modification of the first embodiment, the description will be carried out on a configuration that does not include the feedback control system.

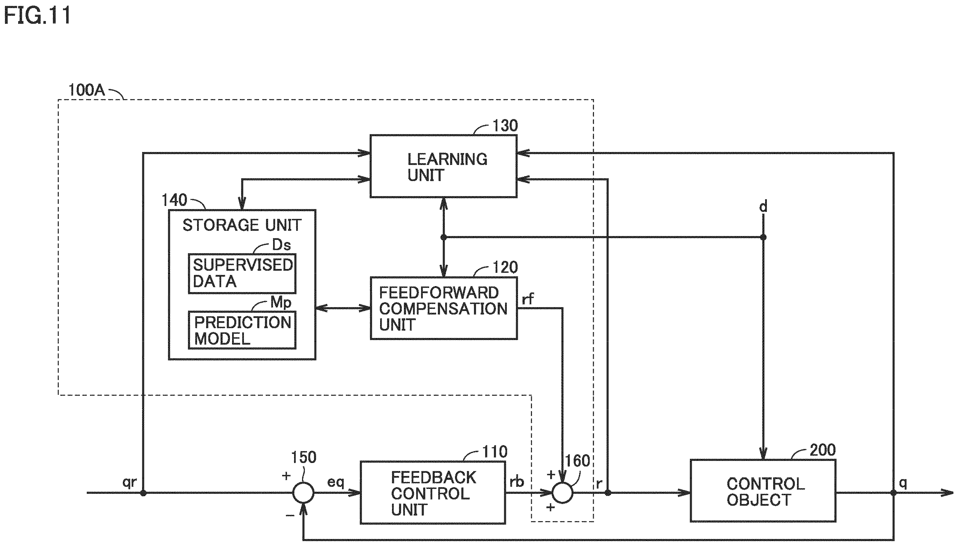

Fig. 11 is a block diagram illustrating a functional configuration of a control device 100A according to a first modification of the first embodiment. The configuration of the control device 100A is different from the control device 100 of Fig. 1a in that the subtracter 150 and the feedback control unit 110 are excluded therefrom. Since the other components are the same, the description for the same components will not be repeated. The adder 160 may not be included in the control device 100A.

The control device 100A determines the feedforward compensation value rf of the feedback operation amount rb for the control object 200 subjected to the disturbance d so as to approximate the control amount q of the control object 200 to the target value qr. According to the control device 100A, while maintaining the conventional feedback control system, it is possible to easily extend a conventional feedback control system to a control system that includes a feedforward control system and a learning function, by adding a control device to the conventional feedback control system.

### [Second Modification of First Embodiment]

In the first embodiment, the relationship represented by the prediction model is a relationship between the disturbance d and the feedforward compensation value rf which is a difference between the operation amount r and the average value rb0. In a second modification of the first embodiment, the relationship represented by the prediction model is a relationship between the disturbance d and the operation amount r.

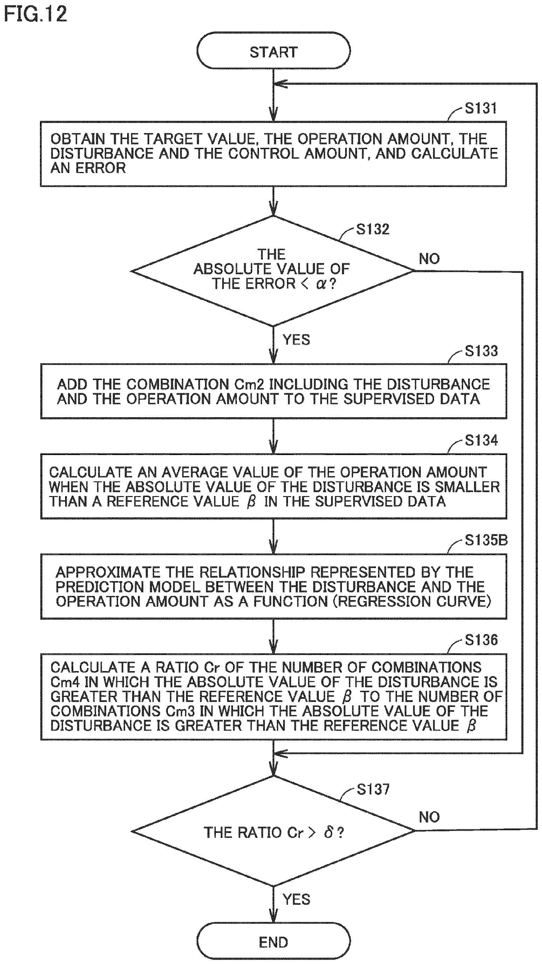

Fig. 12 is a flowchart illustrating another specific procedure of the machine learning process S130 of Fig. 2. The flowchart illustrated in Fig. 12 is obtained by replacing S135 in Fig. 9 with S135B. As illustrated in Fig. 12, after performing S131 to S134 in the same manner as in the first embodiment, in S135B, the learning unit 130 approximates the relationship represented by the prediction model Mp between the disturbance d and the operation amount r as a function (regression curve) which uses the operation amount r as an objective variable and the disturbance d as an explanatory variable, and then advances the procedure to S136. Similarly to the first embodiment, the learning unit 130 performs S136 and S137, and ends the procedure. The feedforward compensation unit 120 predicts the operation amount r from the disturbance d using the prediction model Mp, and outputs a value (= r-rb0) obtained by subtracting the average value rb0 from the operation amount r to the adder 160 as the feedforward compensation value rf.

As described above, according to the control device and the control method according to the first embodiment and the first and second modifications, it is possible to improve the accuracy of the feedforward control on the control object.

### [Second Embodiment]

In the first embodiment, the feedback control system, the feedforward control system, and the configuration for performing machine learning on the prediction model are included in one control device. In the second embodiment, the feedback control system, the feedforward control system, and the configuration for performing machine learning on the prediction model are designed as separate units.

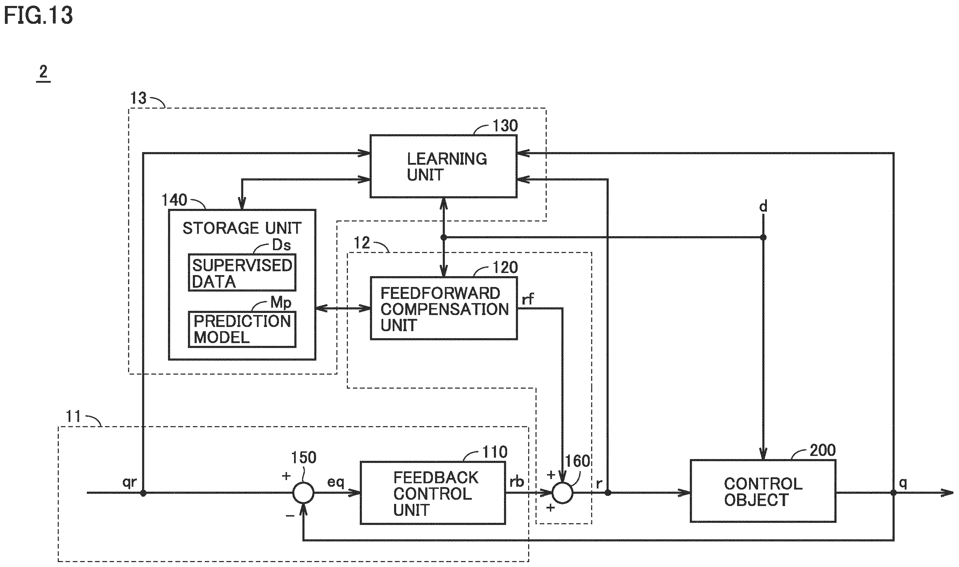

Fig. 13 is a block diagram illustrating a functional configuration of a control system 2 according to the second embodiment. In Fig. 13, the components denoted by the same reference numerals as those components in Fig. 1 have the same functions as those components denoted by the same reference numerals in the first embodiment, and the description of the same components will not be repeated.

As illustrated in Fig. 13, the control system 2 includes a feedback control device 11, a feedforward compensation device 12, and a learning device 13. The feedback control device 11 includes a feedback control unit 110 and a subtracter 150. The feedforward compensation device 12 includes a feedforward compensation unit 120 and an adder 160. The learning device 13 includes a learning unit 130 and a storage unit 140. The feedback control device 11, the feedforward compensation device 12, the learning device 13, and the control object 200 may be connected to each other via a network and may be disposed remotely from each other. The adder 160 may be included in the feedback control device 11 instead of the feedforward compensation device 12.

According to the control system 2, it is possible to easily extend a conventional control system by maintaining the conventional feedback control device and adding a feedforward compensation device and a learning device to the conventional feedback control system.

As described above, according to the control system, the feedforward compensation device, and the control method, it is possible to improve the accuracy of the feedforward control on the control object.

### [Third Embodiment]

In the third embodiment, a control device that includes a PLC (Programmable Logic Controller) will be described as an example of the control device according to the first embodiment.

### <Example Network Configuration of Control System>

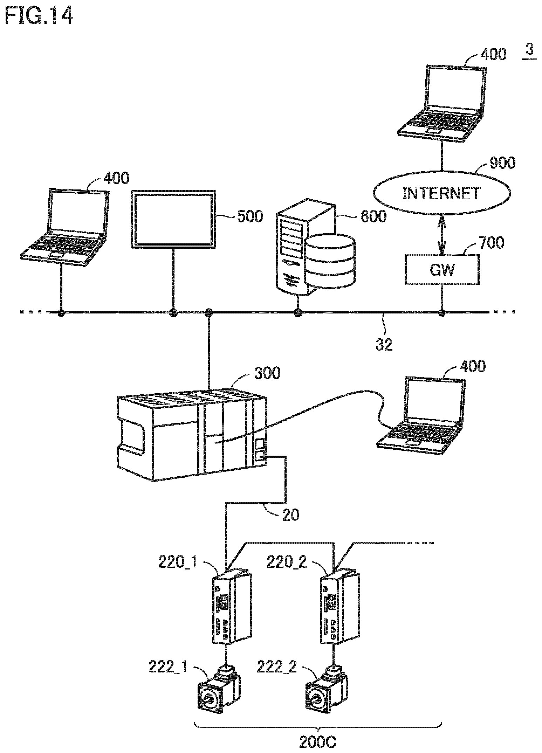

Fig. 14 is a schematic diagram illustrating an example network configuration of a control system 3 according to the third embodiment. As illustrated in Fig. 14, the control system 3 includes a group of devices in which a plurality of devices can communicate with each other. Typically, the group of devices may include a control device 300, which is a processing entity that executes a control program, and peripheral devices connected to the control device 300. The control device 300 has a functional configuration similar to that of the control device 100 illustrated in Fig. 1.

The control device 300 corresponds to an industrial controller that controls control objects such as various facilities or apparatuses. The control device 300 is a computer that performs control operations, and typically includes a PLC (Programmable Logic Controller). The control device 300 is connected to a field device 200C via a field network 20. The control device 300 exchanges data with at least one field device 200C via the field network 20.

The control operation executed in the control device 300 includes, for example, a process of collecting data collected or generated by the field device 200C, a process of generating data such as a command value (operation amount) for the field device 200C, and a process of transmitting the generated output data to a target field device 200C. The data collected or generated by the field device 200C includes data related to a disturbance inputted to the field device 200C and a control amount as a result of an actual operation of the field device 200C according to a command value. The command value for the field device 200C is determined by adding the feedforward compensation value predicted from the disturbance by the prediction model to the operation amount temporarily calculated based on an error between a target control amount (target value) calculated based on the control program executed by the control device 300 and the actual control amount.

Preferably, the field network 20 is a bus or network that performs periodic communications. Examples of a bus or network that performs periodic communications include EtherCAT (registered trademark), EtherNet/IP (registered trademark), DeviceNet (registered trademark), CompoNet (registered trademark), or the like. EtherCAT (registered trademark) is preferred since it guarantees the arrival time of data.

Any field device 200C may be connected to the field network 20. The field device 200C may include an actuator that offers a physical action to a robot, a conveyor or the like on the field side, an input/output device that exchanges information with the field, or the like.

In the control system 3, the field device 200C includes a plurality of servo drivers 220_1 and 220_2, and a plurality of servo motors 222_1 and 222_2 connected to the plurality of servo drivers 220_1 and 220_2, respectively. The field device 200C is an example of a "control object".

The servo drivers 220_1 and 220_2 drive the servo motors 222_1 and 222_2, respectively, in accordance with a command value (for example, a position command value or a speed command value) from the control device 300. In this way, the control device 300 can control the field device 200C.

The control device 300 is also connected to other devices via a host network 32. The host network 32 is connected to an external network such as the Internet 900 via a gateway 700. The host network 32 may adopt a general network protocol such as an Ethernet (registered trademark) or an Ethernet/IP (registered trademark). More specifically, at least one server device 600 and at least one display device 500 may be connected to the host network 32.

The server device 600 may be a database system, a manufacturing execution system (MES), or the like. The manufacturing execution system is configured to obtain information from a manufacturing apparatus or facility to be controlled so as to monitor and manage the entire production line, and may also be configured to handle order information, quality information, shipping information or the like. The present disclosure is not limited thereto, and an apparatus configured to provide an information-based service may be connected to the host network 32. The information-based service may include a process of acquiring information from a manufacturing apparatus or facility to be controlled and performing macro or micro analysis or the like. For example, the information-based service may include data mining for extracting some characteristic trend in information from a manufacturing apparatus or facility to be controlled, a machine learning tool for performing machine learning based on information from a facility or a machine to be controlled, or the like.

The display device 500 receives an operation from a user, outputs a command or the like to the control device 300 in response to the user operation, and graphically displays an operation result or the like from the control device 300.

A support device 400 may be connected to the control device 300. The support device 400 may be connected to the control device 300 via the host network 32 or the Internet 900. The support device 400 is an auxiliary device that provides necessary supports to the control device 300 for controlling a control object. Specifically, the support device 400 provides a development environment for programs to be executed on the control device 300 (a program creating/editing tool, a parser, a compiler, or the like), a configuration environment for setting configuration information for the control device 300 and various devices connected to the control device 300, a function for outputting generated programs to the control device 300, a function for modifying and changing programs to be executed on the control device 300 online, and the like.

In the control system 3, the control device 300, the support device 400, and the display device 500 are configured separately from each other, and however, all or a part of these devices may be integrated as a single device.

The control device 300 is used not only in a production site but also in the other production sites. Further, the control device may be used in a plurality of different production lines in a production site.

### <Example Hardware Configuration of Control Device>

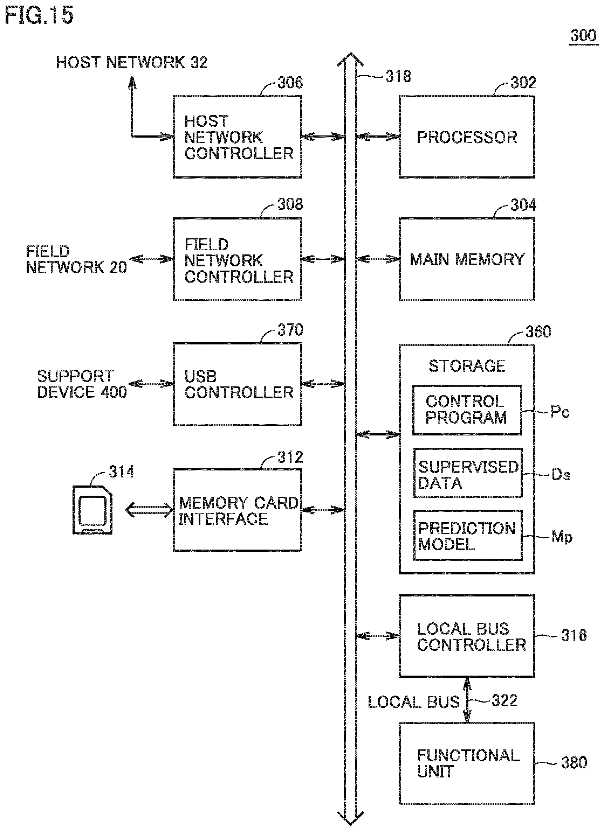

Fig. 15 is a block diagram illustrating an example hardware configuration of the control device 300 of Fig. 14. As illustrated in Fig. 15, the control device 300 includes a processor 302, a main memory 304, a storage 360, a memory card interface 312, a host network controller 306, a field network controller 308, a local bus controller 316, and a USB (Universal Serial Bus) controller 370 that provides a USB interface. These components are connected to each other via a processor bus 318.

The processor 302 corresponds to an arithmetic processing unit that executes a control operation, and includes a CPU (Central Processing Unit) and/or a GPU (Graphics Processing Unit). Specifically, the processor 302 reads out a program stored in the storage 360, develops the program in the main memory 304, and executes the program, thereby implementing a control operation on a control object.

The main memory 304 includes a volatile storage unit such as a DRAM (Dynamic Random Access Memory) and/or a SRAM (Static Random Access Memory). The storage 360 includes, for example, a non-volatile storage unit such as an SSD (Solid State Drive) and/or an HDD (Hard Disk Drive).

The storage 360 stores a control program Pc, supervised data Ds, and a prediction model Mp. The storage 360 corresponds to the storage unit 140 of Fig. 1. The control program Pc includes a program for integrally controlling the control device 300 to realize each function of the control device 300. In other words, the processor 302 that executes the control program Pc corresponds to the feedback control system (the feedback control unit 110 and the subtracter 150), the feedforward control system (the feedforward compensation unit 120 and the adder 160), and the learning unit 130 in Fig. 1.

The memory card interface 312 accepts a memory card 314, which is an example of a detachable storage medium. The memory card interface 312 can read data from or write data to the memory card 314.

The host network controller 306 exchanges data with any information processing device connected to the host network 32 via the host network 32 (for example, a local area network).

The field network controller 308 exchanges data with any devices such as the servo motors 222_1 and 222_2 via the field network 20.

The local bus controller 316 exchanges data with any functional unit 380 constituting the control device 300 via the local bus 322. The functional unit 380 includes, for example, an analog I/O unit for inputting and/or outputting analog signals, a digital I/O unit for inputting and/or outputting digital signals, and a counter unit for receiving pulses from an encoder or the like.

The USB controller 370 exchanges data with any information processing device via a USB connection. The USB controller 370 is connected to, for example, the support device 400.

As described above, according to the control device and the control method, it is possible to improve the accuracy of the feedforward control on the control object.

### <Appendix>

The embodiments described above include the following technical ideas.

### [Aspect 1]

A control device (100, 300) which determines a feedforward compensation value (rf) of a feedback operation amount (rb) for a control object (200, 200C) subjected to a disturbance (d) so as to approximate a control amount (q) of the control object (200, 200C) to a target value (qr),
the feedback operation amount (rb) is determined by a feedback control unit (110) based on an error (eq) between the target value (qr) and the control amount (q),
the sum of the feedback operation amount (rb) and the feedforward compensation value (rf) is output to the control object (200, 200C) as an operation amount (r),
the control device (100, 300) includes:
   a feedforward compensation unit (120) which determines the feedforward compensation value (rf) from the disturbance (d) using a prediction model (Mp); and
   a learning unit (130) which performs machine learning on the prediction model (Mp) using supervised data (Ds),
   the learning unit (130) is configured to:
      obtain at least one first combination (Cm1) which includes the target value (qr), the operation amount (r) corresponding to the target value (qr), the disturbance (d), and the control amount (q) corresponding to both the disturbance (d) and the operation amount (r); and
      add, to the supervised data (Ds), at least one second combination (Cm2) which is a part of the at least one first combination (Cm1) and includes the disturbance (d) and the operation amount (r) when the absolute value of the error (eq) is smaller than a first reference value (α).

### [Aspect 2]

In the control device (100, 300) according to aspect 1, the learning unit (130) is configured to:
calculate an average value (rb0) of the operation amount (r) when the absolute value of the disturbance (d) is smaller than a second reference value (β) in the supervised data (Ds);
approximate a relationship represented by the prediction model (Mp) between the disturbance (d) and the feedforward compensation value (rf) which is a difference between the operation amount (r) and the average value (rb0) as a function which uses the feedforward compensation value (rf) as an objective variable and uses the disturbance (d) as an explanatory variable; and
finish the machine learning when a ratio of the number of fourth combinations (Cm4) to the number of third combinations (Cm3) is greater than a third reference value (δ), the third combinations being a part of the at least one first combination (Cm1) and in the third combinations the absolute value of the disturbance (d) is greater than the second reference value (β), the fourth combinations being a part of the at least one second combination (β) and in the fourth combinations the absolute value of the disturbance (d) being greater than the second reference value (β).

### [Aspect 3]

In the control device (100, 300) according to aspect 1, the learning unit (130) is configured to:
calculate an average value (rb0) of the operation amount (r) when the absolute value of the disturbance (d) is smaller than a second reference value (β) in the supervised data (Ds);
approximate a relationship represented by the prediction model (Mp) between the disturbance (d) and the operation amount (r) as a function which uses the operation amount (r) as an objective variable and uses the disturbance (d) as an explanatory variable; and
finish the machine learning when a ratio of the number of fourth combinations (Cm4) to the number of third combinations (Cm3) is greater than a third reference value (δ), the third combinations being a part of the at least one first combination (Cm1) and in the third combinations the absolute value of the disturbance (d) being greater than the second reference value (β), the fourth combinations being a part of the at least one second combination (Cm2) and in the fourth combinations the absolute value of the disturbance (d) being greater than the second reference value (β),
the feedforward compensation unit (120) determines a value obtained by subtracting the average value (rb0) from the operation amount (r) predicted from the disturbance (d) by the prediction model (Mp) as the feedforward compensation value.

### [Aspect 4]

In the control device (100, 300) according to aspect 2 or 3, the learning unit (130) restarts the machine learning when the machine learning is finished and when the ratio (Cr) is smaller than the third reference value (δ).

### [Aspect 5]

A control system (2) configured to output the sum of a feedback operation amount (rb) for a control object (200, 200C) subjected to a disturbance (d) and a feedforward compensation value (rf) to the control object (200, 200C) as an operation amount (r) so as to approximate a control amount (q) of the control object (200, 200C) to a target value (qr), the control system comprising:
a feedback control device (11) which determines the feedback operation amount (rb) based on an error (eq) between the target value (qr) and the control amount (q);
a feedforward compensation device (12) which determines the feedforward compensation value (rf) from the disturbance (d) using a prediction model (Mp); and
a learning device (13) which performs machine learning on the prediction model (Mp) using supervised data (Ds),
the learning device (13) is configured to:
   obtain at least one first combination (Cm1) which includes the target value (qr), the operation amount (r) corresponding to the target value (qr), the disturbance (d), and the control amount (q) corresponding to both the disturbance (d) and the operation amount (r); and
   add, to the supervised data (Ds), at least one second combination (Cm2) which is a part of the at least one first combination (Cm1) and includes the disturbance (d) and the operation amount (r) when the absolute value of the error (eq) is smaller than a first reference value (α).

### [Aspect 6]

A control method for determining a feedforward compensation value (rf) of a feedback operation amount (rb) for a control object (200, 200C) subjected to a disturbance so as to approximate a control amount (q) of the control object (200, 200C) to a target value (qr),
the feedback operation amount (rb) is determined by a feedback control unit (110) based on an error (eq) between the target value (qr) and the control amount (q),
the sum of the feedback operation amount (rb) and the feedforward compensation value (rf) is output to the control object (200, 200C) as an operation amount (r),
the control method includes:
   a step (S121) of determining the feedforward compensation value (rf) from the disturbance (d) using a prediction model (Mp); and
   a step (S130) of performing machine learning on the prediction model (Mp) using supervised data (Ds),
the step (S130) of performing the machine learning includes:
   a step (S131) of obtaining at least one first combination (Cm1) which includes the target value (qr), the operation amount (r) corresponding to the target value (qr), the disturbance (d), and the control amount (q) corresponding to both the disturbance (d) and the operation amount (r); and
   a step (S132, S133) of adding, to the supervised data (Ds), at least one second combination (Cm2) which is a part of the at least one first combination (Cm1) and includes the disturbance (d) and the operation amount (r) when the absolute value of the error (eq) is smaller than a first reference value (α).

It is contemplated that the embodiments disclosed herein may be appropriately combined and implemented without contradiction. It should be understood that the embodiments disclosed herein are illustrative and not restrictive in all respects. It is intended that the scope of the present disclosure is defined not by the above description but defined by the claims and encompasses all modifications equivalent in meaning and scope to the claims.

### REFERENCE SIGNS LIST

2, 3: control system; 11: feedback control device; 12: feedforward compensation device; 13: learning device; 20: field network; 32: host network; 100, 100A, 300: control device; 110: feedback control unit; 120: feedforward compensation unit; 122: local bus; 130: learning unit; 140: storage unit; 150: subtracter; 160: adder; 200: control object; 200c: field device; 220: servo driver; 222: servo motor; 302: processor; 304: main memory; 306: host network controller; 308: field network controller; 312: memory card interface; 314: memory card; 316: local bus controller; 318: processor bus; 360: storage; 370: USB controller; 380: functional unit; 400: support device; 500: display device; 600: server device; 700: gateway; 900: internet; Ds: supervised data; Mp: prediction model; Pc: control program

## Claims

1. A control device which determines a feedforward compensation value of a feedback operation amount for a control object subjected to a disturbance so as to approximate a control amount of the control object to a target value,
the feedback operation amount is determined by a feedback control unit based on an error between the target value and the control amount,
a sum of the feedback operation amount and the feedforward compensation value is output to the control object as an operation amount,
the control device includes:
a feedforward compensation unit which determines the feedforward compensation value from the disturbance using a prediction model; and
a learning unit which performs machine learning on the prediction model using supervised data,
the learning unit is configured to:
obtain at least one first combination which includes the target value, the operation amount corresponding to the target value, the disturbance, and the control amount corresponding to both the disturbance and the operation amount; and
add, to the supervised data, at least one second combination which is a part of the at least one first combination and includes the disturbance and the operation amount when the absolute value of the error is smaller than a first reference value.

2. The control device according to claim 1, wherein
the learning unit is configured to:
calculate an average value of the operation amount when the absolute value of the disturbance is smaller than a second reference value in the supervised data;
approximate a relationship represented by the prediction model between the disturbance and the feedforward compensation value which is a difference between the operation amount and the average value as a function which uses the feedforward compensation value as an objective variable and uses the disturbance as an explanatory variable; and
finish the machine learning when a ratio of the number of fourth combinations to the number of third combinations is greater than a third reference value, the third combinations being a part of the at least one first combination and in the third combinations the absolute value of the disturbance being greater than the second reference value, the fourth combinations being a part of the at least one second combination and in the fourth combinations the absolute value of the disturbance is greater than the second reference value.

3. The control device according to claim 1, wherein
the learning unit is configured to:
calculate an average value of the operation amount when the absolute value of the disturbance is smaller than a second reference value in the supervised data;
approximate a relationship represented by the prediction model between the disturbance and the operation amount as a function which uses the operation amount as an objective variable and uses the disturbance as an explanatory variable; and
finish the machine learning when a ratio of the number of fourth combinations to the number of third combinations is greater than a third reference value, the third combinations being a part of the at least one first combination and in the third combinations the absolute value of the disturbance being greater than the second reference value, the fourth combinations being a part of the at least one second combination and in the fourth combinations the absolute value of the disturbance being greater than the second reference value,
the feedforward compensation unit determines a value obtained by subtracting the average value from the operation amount predicted from the disturbance by the prediction model as the feedforward compensation value.

4. The control device according to claim 2 or 3, wherein
the learning unit restarts the machine learning when the machine learning is finished and when the ratio is smaller than the third reference value.

5. A control system configured to output a sum of a feedback operation amount for a control object subjected to a disturbance and a feedforward compensation value to the control object as an operation amount so as to approximate a control amount of the control object to a target value, the control system comprising:
a feedback control device which determines the feedback operation amount based on an error between the target value and the control amount;
a feedforward compensation device which determines the feedforward compensation value from the disturbance using a prediction model; and
a learning device which performs machine learning on the prediction model using supervised data,
the learning device is configured to:
obtain at least one first combination which includes the target value, the operation amount corresponding to the target value, the disturbance, and the control amount corresponding to both the disturbance and the operation amount; and
add, to the supervised data, at least one second combination which is a part of the at least one first combination and includes the disturbance and the operation amount when the absolute value of the error is smaller than a first reference value.

6. A control method for determining a feedforward compensation value of a feedback operation amount for a control object subjected to a disturbance so as to approximate a control amount of the control object to a target value,
the feedback operation amount is determined by a feedback control unit based on an error between the target value and the control amount,
a sum of the feedback operation amount and the feedforward compensation value is output to the control object as an operation amount,
the control method includes:
a step of determining the feedforward compensation value from the disturbance using a prediction model; and
a step of performing machine learning on the prediction model using supervised data,
the step of performing the machine learning includes:
a step of obtaining at least one first combination which includes the target value, the operation amount corresponding to the target value, the disturbance, and the control amount corresponding to both the disturbance and the operation amount; and
a step of adding, to the supervised data, at least one second combination which is a part of the at least one first combination and includes the disturbance and the operation amount when the absolute value of the error is smaller than a first reference value.
